# EUROPÄISCHE PATENTSCHRIFT

(11) **EP 1 715 215 B1**
(45) Veröffentlichungstag und Bekanntmachung des Hinweises auf die Patenterteilung: **14.10.2009**
(21) Anmeldenummer: 06004434.4
(22) Anmeldetag: 04.03.2006
(51) Int. Cl.: F16F 9/05

(54) **Luftfederdämpfung**
Air spring shock absorber
Amortisseur à ressort pneumatique

(30) Priorität: 20.04.2005 DE 102005018130
(43) Veröffentlichungstag der Anmeldung: 25.10.2006
(73) Patentinhaber: Carl Freudenberg KG, 69469 Weinheim (DE)
(72) Erfinder: Pelz, Peter, Dr., 22769 Hamburg (DE)

(56) Entgegenhaltungen:
- EP-A- 0 658 703
- EP-A- 1 369 267
- DE-B- 1 132 013
- DE-B3- 10 311 263

## Beschreibung

### Technisches Gebiet

Die Erfindung befasst sich mit einem Luftfederdämpfer mit in einem zylindrischen Gehäuse untergebrachten und durch einen Kolben getrennte erste und zweite Arbeitskammer, die über im Kolben eingefügte Durchlassöffnungen miteinander kommunizieren.

### Stand der Technik

Aus der DE 196 42 024 A1 ist eine Rollbalg-Gasfeder mit einem Außenstützteil bekannt geworden, bei dem eine Arbeitskammer vorhanden ist, in der ein Kolben einer Axialbewegung ausführt und den Rollbalg betätigt.

Eine Ausführung mit zwei Arbeitskammern zeigt die DE 34 36 664 C2. Dort sind zwei durch eine Kolbenstange verbundene Kolben vorhanden, die gegenüber einem Gehäuse axial verschiebbar angeordnet sind und hierbei zwei am Gehäuse beziehungsweise den Kolben angebrachte Rollbälge bewegen.

Die DE 199 32 717 C2 zeigt eine andere Ausbildung einer Federdämpfereinheit für ein Kraftfahrzeug bei dem zwei Arbeitsräume durch einen Kolben getrennt werden, wobei einer der Arbeitsräume teilweise von einem Rollbalg eingefasst wird. Der Kolben ist mit einem Drosseleinsatz versehen, durch den eine Verbindung zwischen den beiden Arbeitskammern herstellbar ist.

Schließlich zeigt die DE 103 11 263 B3 die Ausbildung einer Luftfeder mit zwei Arbeitskammern, bei der die Arbeitskammern durch zwei mit ihren Rollfalten entgegengesetzt ausgerichteten Rollbälgen voneinander getrennt sind.

### Darstellung der Erfindung

Von dem genannten Stand der Technik geht die vorliegende Erfindung aus und stellt sich die Aufgabe, einen möglichst einfach in der konstruktiven Ausgestaltung ausgebildeten Luftfederdämpfer zu schaffen, bei dem keine Reibungsflächen zwischen dem Rollkolben und der Innenwandung des Gehäuses vorhanden sind und mit der eine sehr gute Dämpfungs- und Federungscharakteristik erreichbar ist.

Die Lösung der gestellten Aufgabe wird mit den Merkmalen des Anspruchs 1 erreicht. Bei dem Luftfederdämpfer der Eingangs genannten Art wird der Kolben mit einer zylindrischen Außenwand versehen die mit Abstand zur Innenwandung des Gehäuses angeordnet ist, so dass zwischen dem Kolben und dem Gehäuse zwei mit ihren Rollfalten entgegengerichtete Rollbälge einfügbar sind und bei dem an der Kolbenstange ein zusätzlicher Rollkolben mit einem am Gehäuse und am Rollkolben angefügten Rollbalg als Abschlussdichtung für die zweite Arbeitskammer angebracht ist. Auf diese Weise wird konstruktiv ein sehr einfacher Luftfederdämpfer erreicht, bei dem die Tragkraft und Dämpfung unabhängig voneinander eingestellt werden können. Der Kolben ist etwa mittig im Gehäuse untergebracht. Die Länge der Kolbenaußenwand wird so gewählt, dass durch die Axialbewegung des Kolbens eine genügend große Abrollfläche für die Rollbälge zur Verfügung steht. Bevorzugt wird die Ausbildung des Kolbens so gestaltet, dass der Kolben aus zwei zum Kolbenboden symmetrischen Teilen besteht. Im Kolben ist das Ventil integriert, welches in Zug- und Druckrichtung eine unterschiedliche Charakteristik zeigen kann. Optimal kann die Größe der Durchströmfläche des Ventils im Fahrbetrieb verstellt werden.

Eine einfache Lösung für die Anbringung des Rollbalgs des Rollkolbens am Gehäuse besteht darin, dass der Rollbalg mit seinem radial äußeren Rand am Gehäuserand befestigt ist. Die Abrollfläche für diesen Rollbalg wird dann durch den Rollkolben gebildet.

Nach einer anderen Ausbildung kann der am Rollkolben angebrachte Rollbalg von der Gehäusewandung überdeckt sein. Hierdurch entstehen zwei Abrollflächen nämlich an der Außenwandung des Rollkolbens und an der Innenwandung des verlängerten Gehäuses. Der verlängerte Gehäuseteil kann mit einem verjüngten Durchmesser versehen sein, was zur einer unterschiedlichen Dämpfungsfunktion und Tragfunktion führt.

Schließlich ist es möglich in weiterer Ausgestaltung des Erfindungsgedankens die zweite Arbeitskammer durch eine Trennwand zu unterteilen, die ebenfalls mit Durchlassöffnungen für die in der Kammer befindliche Luft versehen ist. Diese Unterteilung kann gleichzeitig als Führung für die Kolbenstange benutzt werden.

Die Befestigung der Rollbälge am Gehäuse und am Kolben kann in üblicher Weise durchgeführt werden. Es ist jedoch günstig wenn die entgegengerichteten Rollbälge der Dämpferkammer aus einem Einzelstück gebildet sind. Hierdurch kann eine sehr einfache und gute Abdichtung zwischen den Arbeitskammern erreicht werden. In einem Abschnitt der Mittelwand der Rollbälge kann eine rohrförmige Halterung vorgesehen sein, die gleichzeitig die Abrollfläche für die benachbarten Rollfalten darstellt.

### Kurzbeschreibung der Zeichnung

Anhand der in der Zeichnung schematisch dargestellten Ausführungsbeispiele wird die Erfindung nachstehend näher erläutert.

Es zeigt:
- Figur 1: Einen Luftfederdämpfer mit freiliegendem zusätzlichen Rollkolben,
- Figur 2: einen Luftfederdämpfer mit von einem Gehäuseteil eingefassten Rollkolben,
- Figur 3: einen Luftfederdämpfer mit zusätzlich unterteilter Arbeitskammer und
- Figur 4: zwei aus einem Schlauchstück gebildete Rollbälge.

### Ausführung der Erfindung

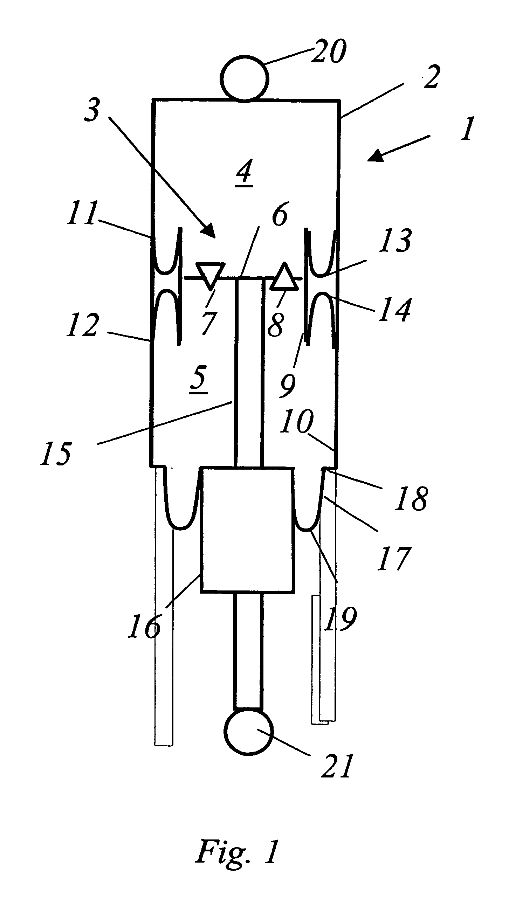

In der Figur 1 ist schematisch der Luftfederdämpfer 1 dargestellt. Wesentlicher Bestandteil des Luftfederdämpfers 1 ist das zylindrische Gehäuse 2 in dem der Kolben 3 untergebracht ist, der die beiden Arbeitskammern 4 und 5 voneinander trennt. Im Kolbenboden 6 sind die Durchlassöffnungen 7 und 8 untergebracht, die je nach Bewegungsrichtung des Kolbens in der einen oder anderen Richtung öffnen. Der Kolben 3 ist mit einer zylindrischen Außenwandung 9 versehen, die mit Abstand zur Innenwandung 10 des Gehäuses 2 angeordnet ist. Zwischen dem Kolben 3 und dem Gehäuse 2 sind die Rollbälge 11 und 12 eingefügt die entgegengerichtet angeordnet sind, so dass ihre Rollfalten 13 und 14 zueinander weisen. Die axiale Ausdehnung der Außenwandung 9 des Kolbens 3 ist so gewählt, dass genügend Raum für die Anbringung der Rollbälge 11 und 12 und die erforderlichen Rollflächen zur Verfügung stehen. An der Kolbenstange 15 ist ein zusätzlicher Rollkolben 16 angebracht, an dem ein weiterer Rollkolben 17 befestigt ist und abrollt. Der Rollbalg 17 ist mit seinem radial äußeren Rand am Gehäuserand 18 befestigt. Die Rollfalte 19 des Rollbalgs 17 ist nach außen gerichtet. Durch diese Ausgestaltung des Luftfederdämpfers 1 ist die erste Arbeitskammer 4 vom zylindrischen Gehäuse 2, dem Kolbenboden 6 und dem Rollbalg 11 begrenzt. Die zweite Arbeitskammer 5 wird von dem gleichen Gehäuse 2 umfasst und durch den Kolbenboden 6 den Rollkolben 16 sowie die Rollbälge 12 und 17 gebildet. Auf diese Weise entsteht ein Luftfederdämpfer bei dem Reibungsverluste vermieden sind und die Tragkraft und Dämpfung unabhängig voneinander eingestellt werden können. Der Luftfederdämpfer ist einfachster Bauart und wird bevorzugt im Fahrzeugbau eingesetzt, wobei die Befestigung an einer Karosserie und einer Radachse über die Anschlüsse 20 und 21 durchgeführt wird.

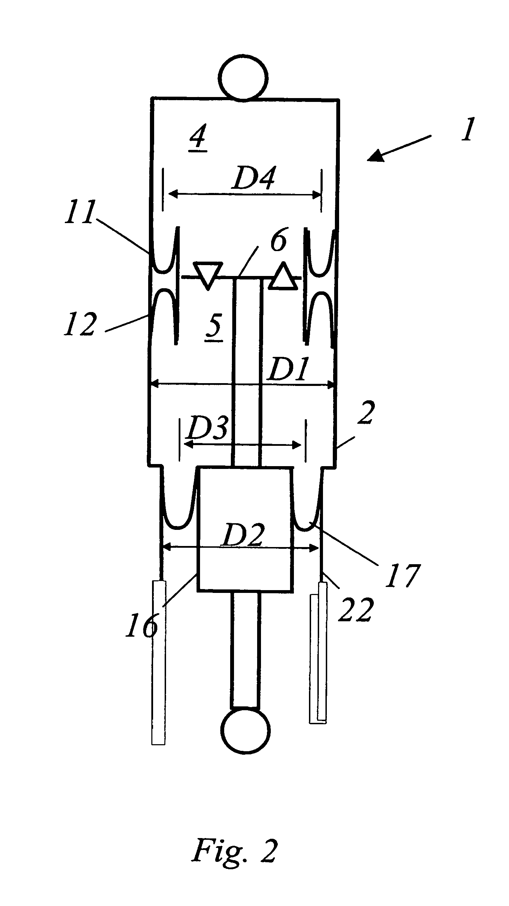

Die Ausführungsform nach der Figur 2 entspricht in allen Teilen der Ausführungsform nach der Figur 1 mit der Abweichung, dass der Rollbalg 17 ebenfalls von der Gehäusewandung überdeckt ist. Dabei ist es günstig, wenn wie in der Figur gezeigt, das Gehäuse 2 mit einem gesonderten Gehäuseabschnitt 22 versehen ist, dass einen verjüngten Durchmesser D2 hat. Dieser Durchmesser D2 ist also kleiner als der Durchmesser D1 des Gehäuses 2. Dies hat zur Folge, dass auch der mittlere Durchmesser D3 des Rollbalgs 17 kleiner ist als die mittleren Durchmesser D4 der Rollbälge 11 und 12 im Gehäuse 2.

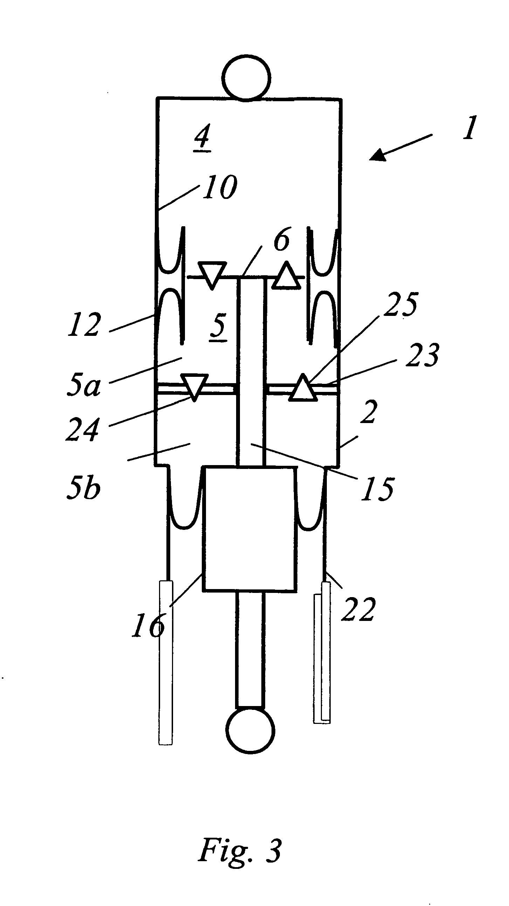

Die Figur 3 zeigt einen Luftfederdämpfer 1 dessen Aufbau mit dem Luftfederdämpfer nach der Figur 2 im Wesentlichen übereinstimmt mit der Abweichung, dass die Kolbenstange 15 von einer Führung 23 gehalten ist. Die Führung 23 ist im Gehäuse 2 innerhalb der zweiten Arbeitskammer 5 untergebracht und unterteilt dieselbe in zwei Unterkammern 5a und 5b, die durch in der Führung 23 vorhandene Durchlassöffnungen 24 und 25 miteinander in Verbindung stehen. Diese Lösung ergibt Vorteile in der Dämpferwirkung. Bei einer Ausführungsform ohne die Durchlassöffnungen 24 und 25, stellt die Unterkammer 5 b ein reines Federvolumen dar.

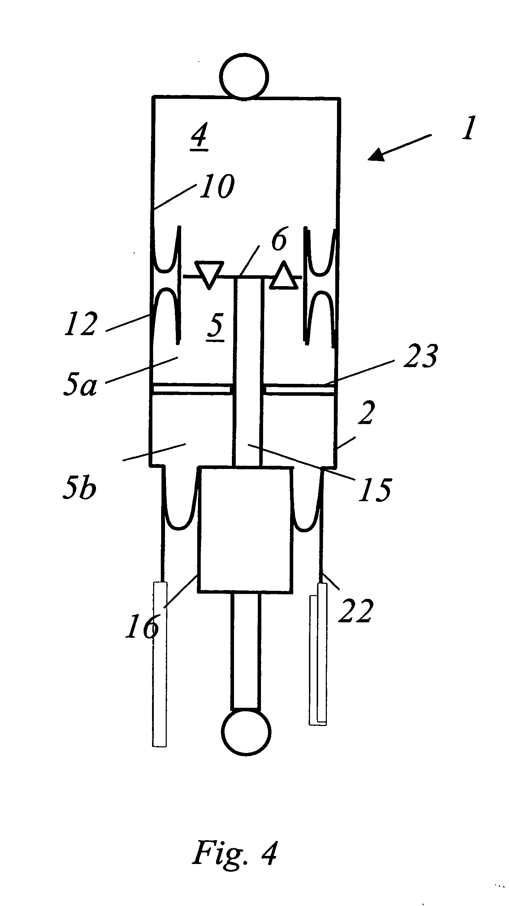

Um die Montage des Luftfederdämpfers 1 zu erleichtern, können die zueinander entgegengerichteten Rollbälge 11, 12 aus einem Einzelstück gebildet sein. Diese Ausbildung ist in der Figur 4 gezeigt. Hier werden die Enden 30, 31 der Rollbälge 11, 12 mit der Innenwandung 10 des Gehäuses 2 verbunden. Die Mittelwand 32 des Rollbalgs wird bevorzugt von einer rohrförmigen Halterung 33 umfasst, die mit der Außenwandung 9 des Kolbens 3 verbunden ist und die gleichzeitig die Abrollfläche für die benachbarten Rollfalten 13 und 14 darstellt.

## Patentansprüche

1. Luftfederdämpfer mit in einem zylindrischen Gehäuse untergebrachten und durch einen Kolben getrennte erste und zweite Arbeitskammer, die über im Kolben eingefügte Durchlassöffnungen miteinander kommunizieren, **dadurch gekennzeichnet, dass** der Kolben (3) eine zylindrische Außenwandung (9) hat, die mit Abstand zur Innenwandung (10) des Gehäuses (2) angeordnet ist und dass zwischen dem Kolben (3) und dem Gehäuse (2) zwei mit ihren Rollfalten (13, 14) entgegengerichtete Rollbälge (11, 12) eingefügt sind und dass an der Kolbenstange (15) ein zusätzlicher Rollkolben (16) mit einem am Gehäuse (2) und am Rollkolben (16) angefügten mit der Rollfalte (19) nach außen weisender Rollbalg (17) als Abschlussdichtung für die zweite Arbeitskammer (5) angebracht ist.

2. Luftfederdämpfer nach Anspruch 1, **dadurch gekennzeichnet, dass** der am Rollkolben (16) angebrachte Rollbalg (17) mit seinem radial äußeren Rand am Gehäuserand (18) befestigt ist.

3. Luftfederdämpfer nach Anspruch 1, **dadurch gekennzeichnet, dass** der am Rollkolben (16) angebrachte Rollbalg (17) von der Gehäusewandung (10) überdeckt ist.

4. Luftfederdämpfer nach einem der Ansprüche 1 bis 3, **dadurch gekennzeichnet, dass** das Gehäuse (2) zum Rollkolben (16) hin einen Gehäuseabschnitt (22) mit einem verjüngten Durchmesser hat.

5. Luftfederdämpfer nach einem der Ansprüche 1 bis 4, **dadurch gekennzeichnet, dass** die Kolbenstange (15) von einer Führung (23) gehalten ist.

6. Luftfederdämpfer nach Anspruch 5, **dadurch gekennzeichnet, dass** die Führung (23) im Gehäuse (2) innerhalb der zweiten Arbeitskammer (5) untergebracht ist und die Arbeitskammer (5) in zwei Unterkammern (5a und 5b) aufteilt, die durch in der Führung (23) vorhandene Durchlassöffnungen (24, 25) miteinander in Verbindung stehen.

7. Luftfederdämpfer nach einem der Ansprüche 1 bis 6, **dadurch gekennzeichnet, dass** die entgegengerichteten Rollbälge (11,12) aus einem Einzelstück gebildet sind.

8. Luftfederdämpfer nach Anspruch 7, **dadurch gekennzeichnet, dass** die Mittelwand des Rollbalgs von einer rohrförmigen Halterung umfasst ist, die gleichzeitig die Abrollfläche für die benachbarten Rollfalten darstellt.

## Claims

1. Air spring damper having first and second working chambers which are accommodated in a cylindrical housing and which are separated by a piston and which communicate with one another via passage openings which are formed in the piston,
**characterized in that** the piston (3) has a cylindrical outer wall (9) which is arranged at a distance from the inner wall (10) of the housing (2), and **in that** two U-type bellows (11, 12) which are aligned with their roll folds (13, 14) in opposite directions are joined between the piston (3) and the housing (2), and **in that** the piston rod (15) has attached to it an additional rolling piston (16) with a U-type bellows (17), which is joined to the housing (2) and to the rolling piston (16) and which points outwards with the roll fold (19), as a closure seal for the second working chamber (5).

2. Air spring damper according to Claim 1,
**characterized in that** the U-type bellows (17) which is attached to the rolling piston (16) is fastened with its radially outer edge to the housing edge (18).

3. Air spring damper according to Claim 1,
**characterized in that** the U-type bellows (17) which is attached to the rolling piston (16) is overlapped by the housing wall (10).

4. Air spring damper according to one of Claims 1 to 3, **characterized in that** the housing (2) has, in the direction of the rolling piston (16), a housing portion (22) with a reduced diameter.

5. Air spring damper according to one of Claims 1 to 4, **characterized in that** the piston rod (15) is held by a guide (23).

6. Air spring damper according to Claim 5,
**characterized in that** the guide (23) is accommodated in the housing (2) within the second working chamber (5) and divides the working chamber (5) into two sub-chambers (5a and 5b) which are connected to one another by means of passage openings (24, 25) which are provided in the guide (23).

7. Air spring damper according to one of Claims 1 to 6, **characterized in that** the oppositely-aligned U-type bellows (11, 12) are formed from a single piece.

8. Air spring damper according to Claim 7,
**characterized in that** the central wall of the U-type bellows is surrounded by a tubular bracket which simultaneously forms the rolling surface for the adjacent roll folds.

## Revendications

1. Amortisseur à ressort pneumatique avec une première et une deuxième chambres de travail disposées dans un boîtier cylindrique et séparées par un piston, qui communiquent l'une avec l'autre par des ouvertures de passage pratiquées dans le piston, **caractérisé en ce que** le piston (3) présente une paroi extérieure cylindrique (9), qui est disposée à distance de la paroi intérieure (10) du boîtier (2), **en ce que** deux soufflets roulants (11, 12) opposés avec leurs plis roulants (13, 14) sont insérés entre le piston (3) et le boîtier (2), et **en ce qu'**un piston roulant supplémentaire (16) est placé sur la tige de piston (15) avec un soufflet roulant (17) attaché au boîtier (2) et au piston roulant (16) et le pli roulant (19) orienté vers l'extérieur servant de joint d'étanchéité de fermeture pour la deuxième chambre de travail (5).

2. Amortisseur à ressort pneumatique selon la revendication 1, **caractérisé en ce que** le soufflet roulant (17) attaché au piston roulant (16) est fixé au bord de boîtier (18) par son bord radialement extérieur.

3. Amortisseur à ressort pneumatique selon la revendication 1, **caractérisé en ce que** le soufflet roulant (17) attaché au piston roulant (16) est recouvert par la paroi (10) du boîtier.

4. Amortisseur à ressort pneumatique selon l'une quelconque des revendications 1 à 3, **caractérisé en ce que** le boîtier (2) comporte une partie de boîtier (22) avec un diamètre réduit au niveau du piston roulant (16).

5. Amortisseur à ressort pneumatique selon l'une quelconque des revendications 1 à 4, **caractérisé en ce que** la tige de piston (15) est maintenue par un guidage (23).

6. Amortisseur à ressort pneumatique selon la revendication 5, **caractérisé en ce que** le guidage (23) est situé à l'intérieur de la deuxième chambre de travail (5) dans le boîtier (2) et divise la chambre de travail (5) en deux sous-chambres (5a et 5b), qui sont en communication l'une avec l'autre par des ouvertures (24, 25) prévues dans le guidage (23).

7. Amortisseur à ressort pneumatique selon l'une quelconque des revendications 1 à 6, **caractérisé en ce que** les soufflets roulants opposés (11, 12) sont formés en une seule pièce.

8. Amortisseur à ressort pneumatique selon la revendication 7, **caractérisé en ce que** la paroi médiane du soufflet roulant est entourée d'un support tubulaire, qui représente en même temps la surface de roulement pour les plis roulants adjacents.
